# EUROPEAN PATENT APPLICATION

(11) **EP 4 761 003 A1**
(43) Date of publication of application: **17.06.2026**
(21) Application number: 24219799.4
(22) Date of filing: 13.12.2024
(51) Int. Cl.: H01R 13/52, B60R 16/02, H01R 13/629, H01R 13/74

(54) **SEALED CONNECTOR ASSEMBLY**

(71) Applicant: Aptiv Technologies AG, 8200 Schaffhausen (CH)
(72) Inventor: GANESAN, Uvaraj, 8200 Schaffhausen (CH); SCHMIDT, Rainer, 8200 Schaffhausen (CH); GOMEZ, Ricardo J., 8200 Schaffhausen (CH); KUMARESH, Rajan, 8200 Schaffhausen (CH)
(74) Representative: Bardehle Pagenberg Partnerschaft mbB Patentanwälte Rechtsanwälte

(57) **Abstract**

A sealed electrical connector assembly which is to be mounted through an opening in a panel, in particular for providing a door connection of a vehicle. The assembly comprises a connector housing, a counter connector housing, and a mating mechanism adapted to facilitate engagement of the connector housing and the counter connector housing. The mating mechanism comprises a first mating element and a second mating element, wherein the first mating element is provided on the counter connector housing and the second mating element is pivotably connected to the connector housing and designed to engage the first mating element and draw the counter connector housing in mating direction upon pivoting, wherein the connector housing includes a cut-out designed to receive the first mating element when the connector housing and the counter connector housing are in engagement in the mating position. The assembly further comprises a seal arrangement associated with the connector housing and/or the counter connector housing and comprising at least one edge sealing designed to seal at a contact area between the connector housing and a panel or the counter connector housing and a panel, and at least one cut-out sealing designed to seal the connection between connector housing and counter connector housing along the contour of said cut-out.

## Description

### 1. Field of the invention

The present disclosure generally relates to an electrical connector assembly. Particularly it relates to a sealed electrical connector assembly to be mounted through an opening in a panel, in particular a vehicle door panel.

### 2. Prior art

A common "lever-type" electrical connection includes an assembly of a connector housing and a counter connector housing. To mate the housings, the connection has an actuating lever pivotably mounted on the connector housing. When the housings are brought in engagement, pivoting of the lever causes the connector housing and the counter connector housing to shift between unmated and fully mated configurations. Usually, the actuating lever and the connector assembly typically have a tooth rack and gear tooth arrangement or a cam groove and a cam follower arrangement for drawing the counter connector housing into mating condition with the connector housing in response to pivoting of the lever. Such connectors are commonly used in the automotive industry.

Typically, in such lever-type electrical connectors a generally U-shaped lever is used, which has a pair of relatively thin-walled lever sidebars that are disposed on opposite sides of the housing connector. The lever sidebars may have gear teeth or cam grooves for engaging toothed racks or cam follower projections respectively on opposite sides of the header assembly. These types of lever connector assemblies are often used where relatively large forces are required to mate and un-mate a pair of connector assemblies. For instance, frictional forces encountered during connecting and disconnecting the connector assemblies may make the process difficult to perform by hand. In some cases, relatively large electrical connectors with high pin counts, such as connectors with 90 or more pin contacts, require at least about 300 N to mate or un-mate the connectors. Further, automotive industry standards specify a maximum of 75 N of user input force be required to perform this mating and un-mating of the connectors.

An example for such a lever-type connector assembly with a U-shaped lever engaging cam-grooves is disclosed in the patent document US 10,374,356 B2.

The patent document EP 2 274 800 B1 describes an electrical connection device with a connector housing and a counter connector housing to which the connector housing is mounted. The connector housing comprises a generally U-shaped lever and drive gears with a lever lobe extending from one side and drive gears extending from another side. The lever lobes during mating of the connector assemblies are received in horizontal cam tracks on each longitudinal side of the header. The drive gears and the lever lobes are positioned inside the housing of the first connector assembly, whereas the lever is mainly positioned outside the housing. Thus, this connector requires a complex mounting procedure and has an increased dimension in transverse direction.

A particular problem encountered with lever-type electrical connector assemblies mounted on a panel of a door of a vehicle is that it is not easy to effectively seal off the interior of the assembly from water because of the lever connection. Intruding water can be a safety hazard. Furthermore, it is expensive to repair damage stemming from intruding humidity, as the interior of a door is not easily accessible.

The object of the present disclosure is to overcome the disadvantages of the prior art connectors, and particularly to provide an electrical connector that is sealed against water intrusion, safe in use, can be mated and un-mated with little effort, provides a reliable design and can be easily mounted.

### 3. Summary of the invention

The above-mentioned object is at least partially realized by a sealed electrical connector assembly according to claim **1.**

Particularly, the above-mentioned object is realized by a sealed electrical connector assembly to be mounted through an opening in a panel, and in particular by a sealed connector assembly providing a door connection of a vehicle, comprising a connector housing, a counter connector housing, and a mating mechanism adapted to facilitate engagement of the connector housing and the counter connector housing by translation of the housings towards each other. The mating mechanism comprises a first mating element and a second mating element. The first mating element is provided on, and preferably protrudes from, the counter connector housing and the second mating element is pivotably connected to the connector housing and designed to engage the first mating element and draw the counter connector housing in mating direction upon pivoting. The pivoting movement of the second mating element provides a lever effect to facilitate the mating process of the connector housing with the counter connector housing. With the lever effect, the force required for mating the housings can be kept low such that the connector assembly can easily be mounted.

To receive the first mating element when the connector housing and the counter connector housing are in engagement in the mating position, the connector housing includes at least one cut-out. The assembly further comprises a seal arrangement designed to be compressed when the connector housing and the counter connector housing are in mating engagement when mounted in the opening of a panel, thereby reliably sealing off the interior of the connector assembly. The seal arrangement can be associated with the connector housing or with the counter connector housing or with both housings. The sealing arrangement comprises at least one edge sealing designed to seal at a contact area between the connector housing and a panel and/or the counter connector housing and a panel, i.e. the area in which the panel is sandwiched between the connector housing and the counter connector housing. To completely seal off the interior of the connector assembly, the sealing arrangement further comprises at least one cut-out sealing designed to seal the connection between connector housing and counter connector housing along the contour of said cut-out of the connector housing. The combination of the cut-out sealing and the cut-out allows the use of an uninterrupted sealing path while allowing the use of a pivoting mating mechanism.

To increase the contact surface of the connector housing and the panel in the mounted position, the connector housing may have a first abutment skirt (like a flange) located at the contact area and protruding outwardly from the connector housing in a plane perpendicular to the mating direction. With the increased contact surface, such an abutment skirt also contributes to a more stable connection between connector housing and panel, as the mating force sandwiching the panel is better distributed.

It is advantageous to at least partially associate the edge sealing to the first abutment skirt, because the increased contact surface of the first abutment skirt ensures that the edge sealing is securely held upon compression and cannot tilt out of contact with the panel, thereby creating a discontinuity in the sealing. With the increased contact surface on which the edge sealing can be attached, the first abutment skirt can further contribute to avoid that the seal does not unintendedly fold upon compression creating gaps in the folds. Finally, also due to the increased contact surface, an edge sealing having a wider cross-section can be chosen to increase the sealing performance.

Similarly on the counter connector housing side, it can prove advantageous to add a second abutment skirt substantially surrounding the counter connector housing in a plane perpendicular to the mating direction. Contrary to the first abutment skirt which is located on an edge of the connector housing, the second abutment skirt is located substantially centrally in a mating direction on the counter connector housing. One half of the counter connector housing is introduced/inserted into the connector housing when brought into mating engagement, while the other half of the counter connector housing is located on the side of the sandwiched panel opposite to the connector housing. In other words: the first half extends through the opening in the panel into the connector housing and the other half is located on the opposite side of the panel. The second abutment skirt is located at the contact area between the counter connector housing and the panel, and similarly to the first abutment skirt, it increases the contact surface of the counter connector housing at the contact area. Obviously, an edge sealing can also be associated with the second abutment skirt, if watertightness is required on both sides of the panel.

To ensure a sealing continuity in the sealing arrangement, the first mating element can be formed in direct connection with the second abutment skirt. Such a configuration is also advantageous because it facilitates the placement of the sealing arrangement.

The sealing arrangement can at least partially be integrally formed with the connector housing and/or the counter connector housing when the housings are produced. Several production methods are known that allow elements with differing material properties, such as stiffer housing and softer, flexible seals, in one production step, such as a 2k over-molding sealing process.

Alternatively, the sealing arrangement can also be at least partially connected to the connector housing and/or the counter connector housing by means of form-fitting, adhesives, snap-fit or similar. This allows a more flexible choice of the sealing arrangement, for example to adapt it in shape, dimensions, compression properties and flexibility to the panel to be sandwiched, or to adapt it to specific external conditions, such as high or low temperatures, wind, rain, etc.

To properly seal off, the sealing arrangement can comprise sealing elements such as ridges, lips and/or tongues. The edge sealing preferably comprises at least one lip, even more preferably two parallel lips, the loose end of each lip being curved towards the exterior of the connector assembly to ensure a good sealing without any sealing element part folding unintentionally. The cut-out sealing preferably comprises at least one straight ridge, which is adapted to seal off the cut-out upon compression and on the sides where the first mating element is slid into the cut-out when mating the housings. The ridge is sufficiently thick not to bend to the side but to be compressed instead, thereby increasing the sealing contact surface of the ridge.

To better distribute and to lower the mating force, the second mating element may include a lever pivotably connected to the connector housing. Such a lever is preferably U-shaped and comprises a crossbar and two sidebars extending from the ends of the crossbar and pivotably connected to the connector housing. With the two sidebars, the mating force is applied symmetrically on the counter connector housing via the mating mechanism. This can minimize the risk of one housing tilting with respect to the other thereby blocking the mating process. Additionally, by choosing the length of the sidebars, the lever effect can be chosen according to the expected mating forces.

To secure the sealed electrical connector assembly against disengagement, for example due to vibrations when the vehicle is moving, the connector assembly may further comprise a locking element designed to hold back the lever when the connector housing and the counter connector housing are in the correct mating position. When the lever cannot leave its mating position, the housings cannot be disconnected, as the housings are interconnected by the mating mechanism that is associated with the lever.

Such locking elements can have different forms. For example, the locking element can be a resilient tongue which can be integral with the connector housing. Such a tongue may snap back to secure the lever once it has been pivoted to its final position. To unlock the lever, for example when repairs are needed, the resilient tongue can be pushed back to unlock the lever and to allow pivoting it into the unmated position of the connector assembly, thereby unmating the connector housings. Additionally or in replacement, the locking element can also be a sliding pin. Such a sliding pin is an element separate of the connector housing and slidably connected to it. Once the lever is in the fully mated position, a locking hole is in alignment with the sliding pin, such that the pin can move into the locking hole to lock the lever in position. When the lever already has a resilient tongue, such sliding pin would be secondary locking mechanism of the lever. Of course, more than one sliding pin with corresponding locking holes can be foreseen.

With respect to the mating mechanism, different options are possible. The mating mechanism could for example include a toothed rack on the first mating element and a gear tooth on the second mating element. If the mating mechanism includes a lever, the gear tooth could be placed on the sidebars on the end opposite the connection to the crossbar. It has been proven sufficient, when the toothed rack includes 2 teeth that cooperate with one gear tooth. Depending on the mating distance, the mating force and other parameters, more or less teeth on the rack and on the gear can be conceived. Another option could be a cam on the first mating element cooperating with a cam follower on the second mating element.

To ensure a reliable seal it is advantageous to provide the first mating element with two distinct parts or portions. The first part takes over the function of sealing off the interior at the location of the mating mechanism. To do so, the first part has a complementary shape to the cut-out of the connector housing, like for example a rectangular shape, but for example a triangular shape can also be chosen. The complementary shape should always allow an introduction of the first mating element (of the counter connector) into the cutout of the connector housing. The second part of the first mating element is foreseen to engage with the second mating element and comprises engagement features. These engagement features could be a toothed rack or a cam as seen above. The second part protrudes further than the first part from the counter connector housing, such that the first part is sandwiched between the counter connector housing and the second part. The cut-out sealing follows the complementary contour of the first part of the first mating element in a plane parallel to the wall of the counter connector housing on which the first part is located. Therefore, when the connector housing and the counter connector housing are brought into full engagement, the cut-out sealing is compressed between the first part of the first mating element and the cut-out contour.

Similarly to the disposition of the lever, it is advantageous to provide two cut-outs arranged symmetrically on each side of the connector housing to ensure a straight mating movement and to minimize the risk of tilting during mating. For this, the mating mechanism should comprise two first mating elements and two second mating elements. In addition to the advantages when mating the connector housing with the counter connector housing, a symmetrical disposition can also have advantages when producing the seal. A symmetrical seal, and in particular a seal with two symmetry axes can be installed either way on the connector assembly thereby minimizing the risks of wrong assembly.

Suitable materials for the connector assembly can be the following: the connector housing, the counter connector housing, the first mating element and/or the second mating element can be made of plastics used in the automotive industry such as PBT, PA. The seal arrangement can be made of silicone or high elongation material.

### 4. Short description of the drawings

In the following, preferred embodiments of the disclosure are disclosed by reference to the accompanying figures, in which:
- Fig. 1: shows a three-dimensional outer view of a first preferred embodiment of the connector assembly clamping a panel between a connector housing and a counter-connector housing;
- Fig. 2: shows a three-dimensional outer view of the connector housing of the first embodiment, with the mate assist lever in full mating position;
- Fig. 3: shows a three-dimensional outer view of the counter-connector housing of the first embodiment;
- Fig. 4: shows a three-dimensional view of a detail of the first mating element of the first preferred embodiment;
- Fig. 5: shows a three-dimensional partially cut view of a detail of the first mating element of the counter-connector housing received in the cut-out of the connector housing,;
- Fig. 6: shows a partially cut three-dimensional view of the first preferred embodiment in a state of partial mating;
- Fig. 7: shows the arrangement of Fig. 6 when the connectors are fully mated;
- Fig. 8: shows a partially cut three-dimensional view of a second embodiment of a sealed electrical connector assembly according to the invention, in a state of initial engagement;
- Fig. 9: shows the arrangement of Fig. 8 when the connectors are fully mated;
- Fig. 10: shows a three-dimensional detail view of an example cut-out of the connector housing together with a corresponding cut-out sealing;
- Fig. 11: shows a three-dimensional view of the seal arrangement;
- Fig. 12: shows a three-dimensional outer view of the second preferred embodiment of the connector assembly with the lever in full mating position and with locking elements.

### 5. Detailed description of preferred embodiments

In the following, preferred embodiments of the present disclosure are described in detail with respect to the figures.

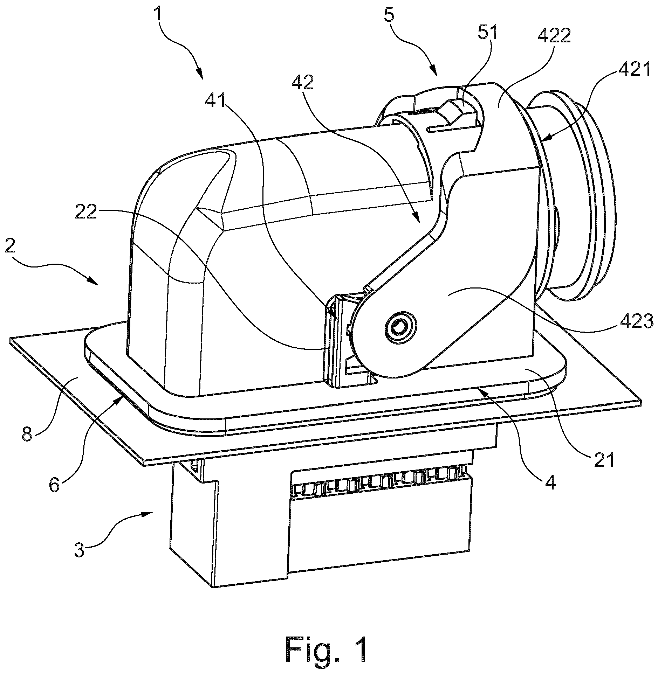

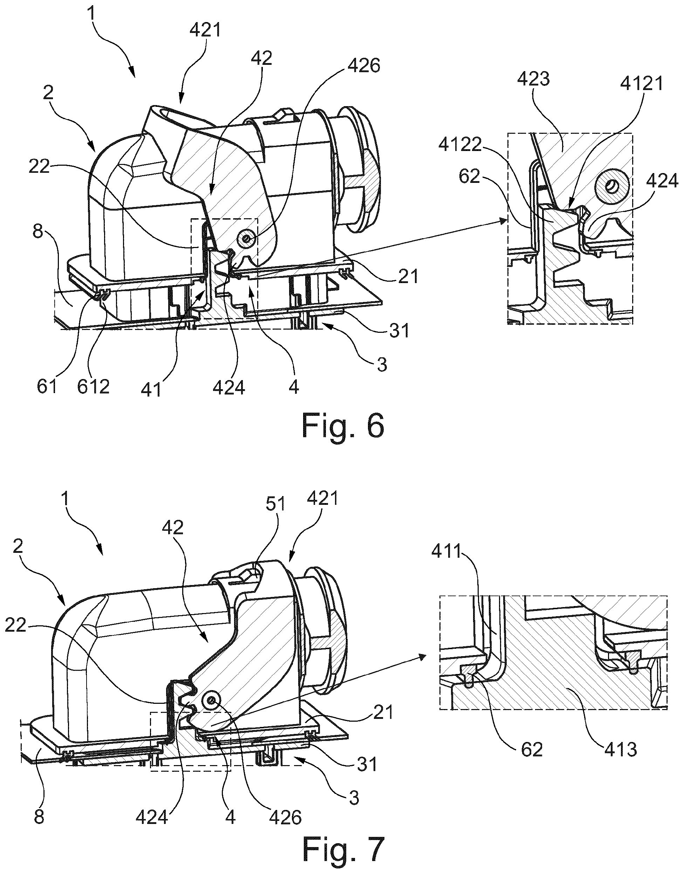

Fig. 1 shows a three-dimensional view of a first preferred embodiment of a connector assembly 1 mounted through an opening in a panel 8. The assembly comprises a connector housing 2 and a counter-connector housing 3. To support the engagement of the connector housing 2 with the counter-connector housing 3 the connector assembly 1 includes a mating mechanism 4. The mating mechanism 4 comprises a first mating element 41 on the counter connector 3 and a second mating element 42 on the connector 2. In the shown fully mated position, the first mating element 41 is located in (is received in) a cut-out 22 of the connector housing 2. The second mating element 42 includes a U-shaped lever 421 pivotably connected to the connector housing 2. The lever 421 has a crossbar 422 and two sidebars 423 extending from the ends of the crossbar 422. The second mating element 42 engages the first mating element 41 (details shown in Figs. 6 and 7) to draw the counter-connector housing 3 towards the connector housing 2 in mating direction upon pivoting of the lever 421. To hold back the lever 421 in the fully/correct mating position shown in Fig. 1, the connector housing 2 includes a locking element 5 in the form of a resilient tongue 51, which snaps back behind the crossbar 422. The locking element 5 can be released by pushing the resilient tongue 51 downward in the orientation shown in Fig. 1. The panel 8 may e.g., be a part of a vehicle door or an A- or B-pillar of a vehicle.

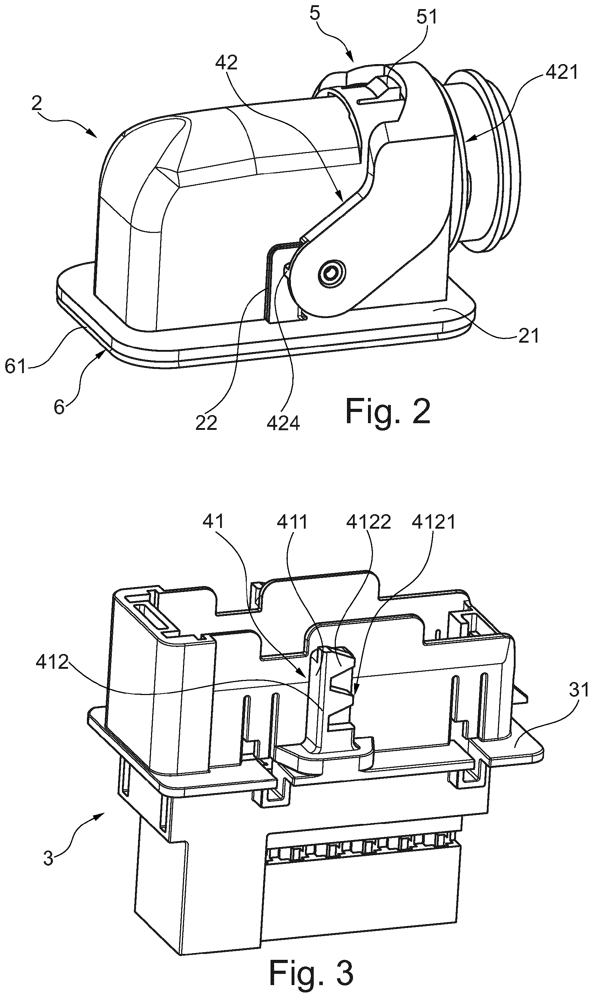

Fig. 2 and Fig. 3 show the connector housing 2 and the counter-connector housing of Fig. 1 in more detail. In Fig. 2, a gear tooth 424 of the second mating element can be seen facing the cut-out 22 in connector housing 2. As the lever is symmetrical, another gear tooth is provided on the other sidebar (not visible in Fig. 2 due to the perspective). The housing 2 comprises a seal arrangement 6, which includes an edge sealing 61 that is connected to a first abutment skirt 21 of the connector housing 2. The edge sealing 61 is designed to seal at a contact area between the connector housing and the panel. As one can take in connection with Fig, 1, the first abutment skirt 21 increases the contact surface of the connector housing 2 and the panel in the mounted position, thereby improving the seal efficiency. The cut-out 22 extends through the abutment skirt 61, i.e., the abutments skirt 61 comprises an opening to receive the first mating element 41 therethrough.

A second abutment skirt 31 is shown in Fig. 3, which is located in a central part (as seen in mating direction) of the counter connector 3. The second abutment skirt 31 substantially surrounds the counter connector housing 3 in a plane perpendicular to the mating direction and the second abutment skirt 31 is located at the contact area 7 between the counter connector housing 3 and the panel in mated condition, to increase the contact surface of the counter connector housing 3 at the contact area. Optionally, an edge sealing may be provided at the second abutment skirt as well. The upper part of the counter-connector 3, i.e. the part above the abutment skirt 31, is received in the connector housing 2 in the full mating position sown in Fig. 1. The first mating element 41 is integral with the upper part of the counter-connector housing 3 to provide the required stiffness and reliability, and it is formed in direct connection with the second abutment skirt 31. The first mating element 41 has a first part 411 and a second part 412 carrying the engagement features 4121. In the first preferred embodiment, the engagement features 4121 are substantially a toothed rack 4122 that engages the gear tooth 424 during mating of the connector housing 2 and the counter-connector housing 3. The first part 411 has a complementary shape to the cut-out 22 and the second part 412 protrudes further from the counter connector housing (i.e., from the outer side wall thereof) than the first part 411.

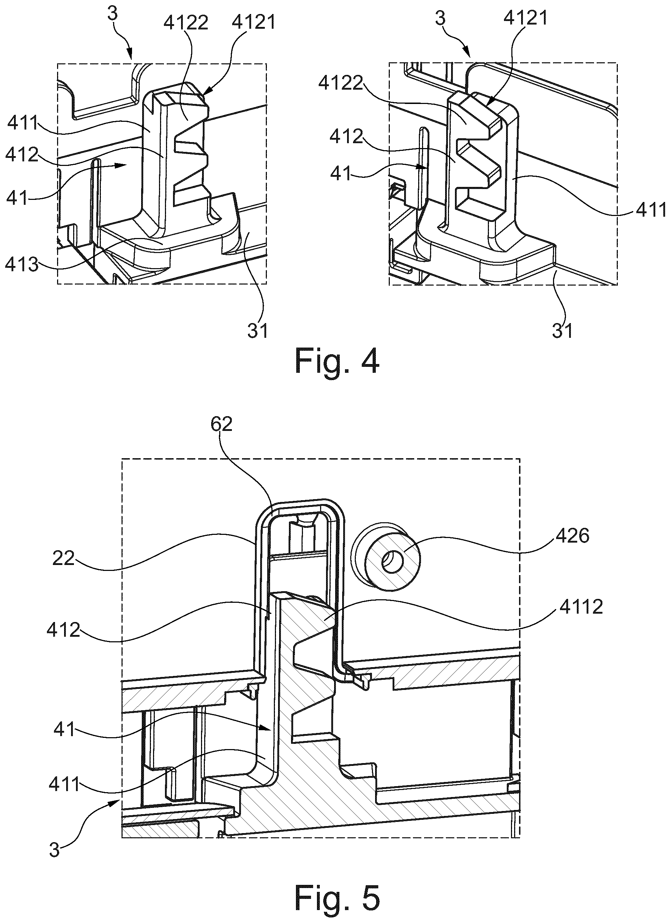

Fig. 4 shows the detail of the first mating element 41, and in particular the toothed rack 4122 from two different three-dimensional perspectives (left and right). The toothed rack 4122 is designed to engage with the gear tooth 424 of the second mating element 42. The detail view shows a smooth surface all around the engagement features 4121. In the shown embodiment, the smooth surface includes a surface of the first part 411 of the first mating element 41 and a surface of a pedestal 413. This smooth part allows a seamless and tight seal around the engagement features 4121 to ensure that no water enters the interior of the connector assembly 1 from the region of the cut-out.

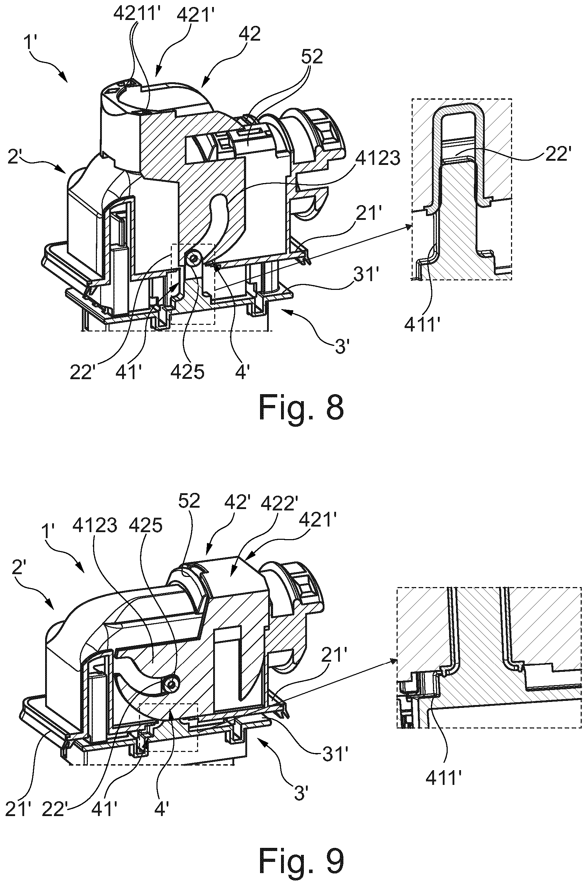

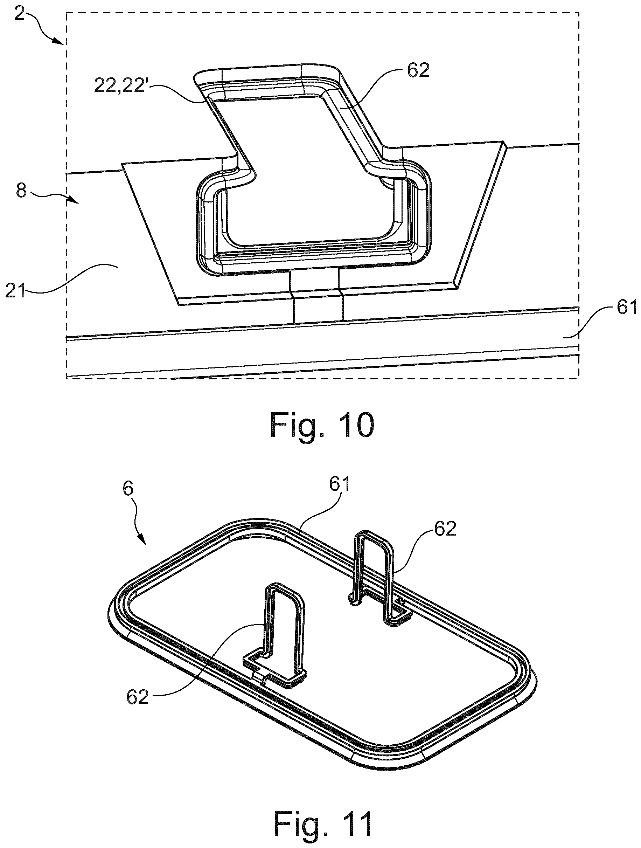

Alternatively, it is possible to dispense with pedestal 413 and to ensure the sealing around the engagement features 4121 by sealing against the second abutment skirt 31 instead of pedestal 413. To do so, the shape of the seal arrangement shown in Fig. 11 would need to be adapted. Instead of the shown toothed rack 4122 it is also possible to have a cam as shown in Fig. 8 and 9.

In Fig. 5 a three-dimensional view of a cut through a detail of the first mating element 41 of the counter-connector housing 3 is shown in a state of initial engagement with the cut-out 22 of the connector housing 2. The cut-out 22 is surrounded by the cut-out sealing 62. The first part 411 has a shape that is complimentary to the cut-out 22 of the connector housing 2. This ensures a reliable watertight connection between the first part 411 and the connector housing 2.

Fig. 6 shows a partial cut three-dimensional view of the first preferred embodiment of the sealed electrical connector assembly 1, in a state of initial engagement and uncovering the mating mechanism 4 together with a detail of the cut-out 22. In the state of initial engagement, the first abutment skirt 21 of the connector housing 2 is at a distance from the second abutment skirt 31 of the counter connector housing 3. In this position the lever 421 is in the open position in which it is pivoted to the left as far as possible. The pivoting axis 426 of the lever 421 is close to the cut-out 22 and the gear tooth 424 is positioned close to the pivoting axis 426. From Fig. 6, it is further visible how the edge sealing 61 is arranged on the abutment skirt 21 of the connector housing 2. In particular, two parallel lips 612 of the edge sealing 61 are shown, the distal end of each lip 612 being curved towards the exterior of the connector assembly 1 to ensure a good sealing. In the detail view of the cut-out 22 to the right in Fig. 6, the cut-out sealing 62 is also partly shown around the cut-out 22. In the state of initial engagement the toothed rack 4122 interacts with the gear tooth 424 provided on the lever 421. Upon rotation of the lever 421, the gear tooth 424 engages with the toothed rack 4122, so that by rotating the lever clockwise in Fig. 6, the connector housings are pulled towards each other, i.e., in mating engagement.

Fig. 7 shows the arrangement of Fig. 6 in fully mated condition. The first mating element 41 including the first and second parts is completely received inside the cut-out 22. The lever 421 is held in the fully mated position by the resilient tongue 51 on the connector housing 2. In this fully mating position, the connector housing 2 and the counter-connector housing 3 sandwich the panel 8 between the first abutment skirt 21 and the second abutment skirt 31. The edge sealing 61 is tightly pressed against the surface of the panel 8 establishing a tight seal. Also the whole contour of the cut-out 22 is sealed and water is prevented from entering inside the connector assembly 1. If necessary, also the second abutment skirt 31 may be provided with a similar edge sealing.

Fig. 8 shows a cut through a three-dimensional view of a second embodiment of the connector assembly 1'. As in Fig. 6, the state of initial engagement is depicted. In contrast to the first embodiment, the shown mating mechanism 4' has a lever 421' comprising a cam 4123 as second mating element 42' and a follower 425 as first mating element 42'. In the initial engagement shown, the follower 425 enters cam 4123 such that upon pivoting of the lever 421' the cam 4123 engages with the follower 425, thereby pulling the connectors towards each other into mating engagement.

In the second embodiment, the locking element 5 comprises two pins 52 that are slidably arranged on connector housing 2'. Furthermore, the edge sealing 61' of the sealing arrangement 6' is mounted on the abutment skirt 21' following and surrounding also the outer circumferential edge of the abutment skirt 21' instead of being mounted only to the contact surface of the abutment skirt. The sealing arrangement may be integrally formed with the connector housings, or it may be a separate component that is attached to the connector housings by means of form fitting (as shown in Fig. 8) or adhesives, a snap-fit connection or similar. Although the panel 8 shown in Fig. 6 and Fig. 7 has been omitted for a better overview in Fig. 8 and Fig. 9, it is clear to the skilled reader that it is the intention that such a panel is also sandwiched between the first abutment skirt 21' and the second abutment skirt 31' of the second embodiment. All explanations relating to these aspects given for Fig. 6 and Fig. 7 apply correspondingly to the figures of the second embodiment.

Fig. 9 shows the arrangement of Fig. 8 in fully mated condition. The lever 42' is pivoted to the full mating position and held in that position by the sliding pins 52, that are slid into corresponding openings (through holes) 4211' provided in crossbar 422'. From the cut through the mating mechanism, it is visible that the follower urges the counter connector housing 3' towards the connector housing 2' until the first part 411'of the first mating element 41' is completely received in the cut-out 22'. The distance between the first abutment skirt 21' and the second abutment skirt 31' in the full mating position substantially corresponds to the thickness of the panel 8 (not shown in Fig. 9).

Fig. 10 shows a three-dimensional view of an exemplary cut-out 22 of the connector housing 2 together with a corresponding cut-out sealing 62. This view shows the circumferential nature of the cut-out sealing 62. The edge sealing 61 is mounted onto the contact surface 8 of the abutment skirt 21 of the connector housing 2.

Fig. 11 shows an overall view of the sealing arrangement 6. The sealing arrangement 6 comprises the edge sealing 61 and the two cut-out sealings 62 arranged symmetrically next to the edge sealing 61. The shown sealing arrangement is made in one single piece including the edge sealing 61 and the cut-out sealing 62. Because of its symmetrical disposition, the sealing arrangement can be mounted on the connector assembly either way, which facilitates mounting and prevents mounting errors.

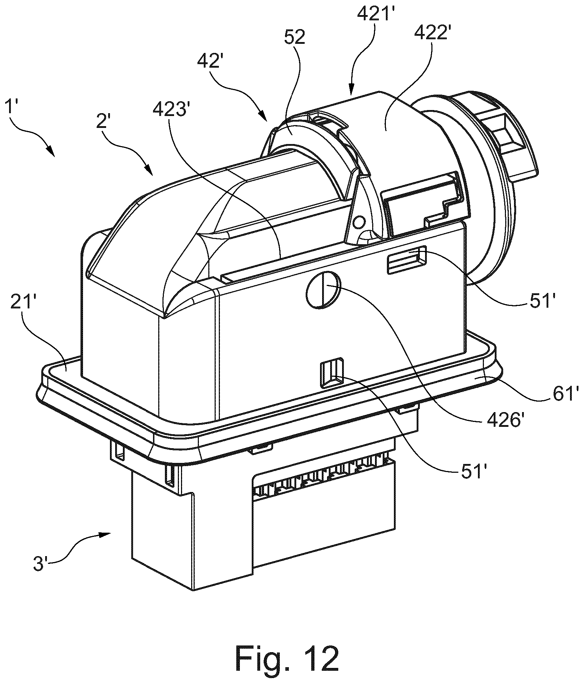

Fig. 12 shows a three-dimensional view of the second preferred embodiment of the connector assembly 1' in the full mating position. As in Fig. 8 and Fig. 9, the panel is not shown to allow a view of the counter connector. The connector housing 2' of the second preferred embodiment has a doubled sidewall into which the lever 421' is inserted upon pivoting into the full mating position. The doubled sidewall has a hole to receive a pin 426' protruding from the lever 421' to provide a pivoting axis for the lever. Additionally, the lever has resilient tongues 51' that snap into openings of the doubled sidewalls when the lever 421' is in the full mating position. Once the lever 421' is held in place in the full mating position by the resilient tongues 51', the sliding pins 52' can be slid into the corresponding openings 4211' on cross bar 422' of lever 421' to additionally secure its position. Fig. 12 also shows the mounting of the edge sealing 61' onto the edge of the abutment skirt 21' of the connector housing 2'.

### List of reference signs

1, 1' Connector assembly
2, 2' Connector housing
21, 21' First abutment skirt
22, 22' Cut-out
3, 3' Counter connector housing
31, 31' Second abutment skirt
4, 4' Mating mechanism
41, 41' First mating element
411, 411' First part
412 Second part
4121, 4121' Engagement features
4122 Toothed rack
4123 Cam
413 Pedestal
42, 42' Second mating element
421, 421' Lever
422, 422' Crossbar
423, 423' Sidebar
424 Gear tooth
425 Cam follower
426, 426' Pivoting axis
4211' openings
5 Locking element
51, 51' Resilient tongue
52 Sliding pin
6, 6' Seal arrangement
61, 61' Edge sealing
62 Cut-out sealing
7 Contact area
8 Panel

## Claims

1. Sealed electrical connector assembly (1, 1') to be mounted through an opening in a panel, in particular for providing a door connection of a vehicle, the assembly comprising:
a connector housing (2, 2'),
a counter connector housing (3, 3'), and
a mating mechanism (4, 4') adapted to facilitate engagement of the connector housing (2, 2') and the counter connector housing (3, 3'), the mating mechanism (4, 4') comprising a first mating element (41, 41') and a second mating element (42, 42'), wherein the first mating element (41, 41') is provided on the counter connector housing (3, 3') and the second mating element (42, 42') is pivotably connected to the connector housing (2, 2') and designed to engage the first mating element (41, 41') and draw the counter connector housing (3, 3') in mating direction upon pivoting,
wherein the connector housing (2, 2') includes a cut-out (22, 22') designed to receive the first mating element (41, 41') when the connector housing (2, 2') and the counter connector housing (3, 3') are in engagement in the mating position,
the assembly further comprising a seal arrangement (6) associated with the connector housing (2, 2') and/or the counter connector housing (3, 3') and comprising at least one edge sealing (61) designed to seal at a contact area (7) between the connector housing (2, 2') and a panel or the counter connector housing (3, 3') and a panel, and at least one cut-out sealing (62) designed to seal the connection between connector housing (2, 2') and counter connector housing (3, 3') along the contour of said cut-out (22, 22').

2. Connector assembly (1, 1') according to claim 1, wherein the connector housing (2, 2') has a first abutment skirt (21, 21') located at the contact area (7), wherein the first abutment skirt (21, 21') increases the contact surface of the connector housing (2, 2') and the panel in the mounted position at the contact area (7).

3. Connector assembly (1, 1') according to claim 2, wherein the edge sealing (61) is at least partially associated to the first abutment skirt (21, 21').

4. Connector assembly (1, 1') according to any preceding claim, wherein the counter connector housing (3, 3') comprises a second abutment skirt (31, 31') substantially surrounding the counter connector housing (3, 3') in a plane perpendicular to the mating direction, wherein the second abutment skirt (31, 31') is located at the contact area (7) between the counter connector housing (3, 3') and the panel to increase the contact surface of the counter connector housing (3, 3') at the contact area (7), wherein the edge sealing (61) is optionally at least partially associated to the second abutment skirt (31, 31').

5. Connector assembly (1, 1') according to claim 4, wherein the first mating element (41, 41') is formed in direct connection with the second abutment skirt (31, 31').

6. Connector assembly (1, 1') according to any preceding claim, wherein the sealing arrangement is at least partially integrally formed with the connector housing (2, 2') and/or the counter connector housing (3, 3').

7. Connector assembly (1, 1') according to any preceding claim, wherein the sealing arrangement is at least partially connected to the connector housing (2, 2') and/or the counter connector housing (3, 3') by means of form-fitting, adhesives, snap-fit or similar.

8. Connector assembly (1, 1') according to any preceding claim, wherein the sealing arrangement comprises sealing elements such as ridges, lips and/or tongues, wherein the edge sealing (61) preferably comprises at least one lip (612), even more preferably two parallel lips (612), the loose end of each lip being curved towards the exterior of the connector assembly (1, 1') and/or wherein the cut-out sealing (62) preferably comprises at least one straight ridge.

9. Connector assembly (1, 1') according to any preceding claim, wherein the second mating element (42, 42') includes a lever (421, 421') pivotably connected to the connector housing (2, 2'), wherein the lever (421, 421') is preferably U-shaped and comprises a crossbar (422, 422') and two sidebars extending from the ends of the crossbar (422, 422').

10. Connector assembly (1, 1') according to claim 9, the connector assembly (1, 1') further comprising a locking element (5) designed to hold back the lever (421, 421') when the connector housing (2, 2') and the counter connector housing (3, 3') are in the correct mating position.

11. Connector assembly (1, 1') according to claim 10, the locking element (5) being at least one of a resilient tongue (51, 51') or a sliding pin (52) configured to lock the lever (421, 421') once it is in the mating position, wherein the resilient tongue (51, 51') is preferably integral with the connector housing (2, 2') and/or the sliding pin (52) is slidably connected to the connector housing (2, 2').

12. Connector assembly (1, 1') according to any preceding claim, the mating mechanism (4, 4') including a toothed rack (4122) on the first mating element (41) and a gear tooth (424) on the second mating element (42), or a cam (4123) on the first mating element (41') and a cam follower (425) on the second mating element (42').

13. Connector assembly (1, 1') according to any preceding claim, wherein the first mating element (41, 41') has a first part (411, 411') having a complementary shape to the cut-out (22, 22') and a second part (412) comprising engagement features (4121, 4121'), the second part (412) protruding further than the first part (411, 411') from the counter connector housing (3, 3'), and wherein the cut-out sealing (62) is compressed between the first part (411, 411') of the first mating element (41, 41') and the cut-out contour.

14. Connector assembly (1, 1') according to any preceding claim, wherein the connector housing (2, 2') comprises two cut-outs (22, 22') arranged symmetrically on the sides of the connector housing (2, 2'), and wherein the mating mechanism (4, 4') comprises two first mating elements (41, 41') and two second mating elements (42, 42'), and wherein preferably the seal arrangement (6) is monolithic and has two symmetry axes.

15. Connector assembly (1, 1') according to any preceding claim, wherein the connector housing (2, 2') is made of Automotive plastics, such as PBT, PA, and/or wherein the counter connector housing (3, 3') is made of Automotive plastics, such as PBT, PA, and/or wherein the first mating element (41, 41') is made of Automotive plastics, such as PBT, PA and/or wherein the second mating element (42, 42') is made of Automotive plastics, such as PBT, PA, and/or wherein the seal arrangement (6) is made of Silicone or high elongation material.
